# EUROPEAN PATENT APPLICATION

(11) **EP 2 508 385 A1**
(43) Date of publication of application: **10.10.2012**
(21) Application number: 09804268.2
(22) Date of filing: 02.12.2009
(51) Int. Cl.: B60L 3/10, B60L 11/18

(54) **TRACTION SYSTEM FOR AN ELECTRIC VEHICLE AND ELECTRIC VEHICLE INCLUDING THE TRACTION SYSTEM**

(71) Applicant: Fundación Robotiker, E-48170 Zamudio (Vizcaya) (ES)
(72) Inventor: IGLESIAS AGUINAGA, José, Ignacio, E-48170 Zamudio (Vizcaya) (ES); GOTI ATXA, Angel, E-48170 Zamudio (Vizcaya) (ES); MARTÍN SANDI, Adrián, E-48170 Zamudio (Vizcaya) (ES); PEÑA RODRÍGUEZ, Alberto, E-48170 Zamudio (Vizcaya) (ES)
(74) Representative: Carpintero Lopez, Francisco
(86) International application number: PCT/ES2009/070549
(87) International publication number: WO 2011/067423

(57) **Abstract**

The invention relates to a traction system for a direct drive electric vehicle comprising respective electric motors (3a, 3b) with respective first power axles (2a, 2b) directly connected to a right drive wheel (1a) and to a left drive wheel (1b), a traction control circuit (7) transmitting additional power to a drive wheel (1a, 1b) when sensor means (7a, 7b) detect a traction loss of another drive wheel (1 a, 1 b), and comprising
a coupling device (5) connected to respective second power axles (4a, 4b) of the electric motors (3a, 3b) to perform a variable torque transmission from a nil degree of coupling to a complete degree coupling between the electric motors (3a, 3b);
a management logic (6) activating and adjusting the degree of coupling of the coupling device (5) between the electric motors (3a, 3b) according to the degree of traction loss of a drive wheel (1a, 1b).

## Description

### Technical Field of the Invention

The present invention is comprised in the technical field of the automotive industry, and more specifically in purely electric drive systems for both automobile and industrial vehicles, particularly small industrial vehicles, provided with direct drive systems in which the drive wheels of the vehicle are directly connected to respective electric motors.

### Background of the Invention

Within the drive technologies available and for use in traction applications in the automotive field, electric traction has very attractive features for becoming the most used technology in future years.

Electric drive vehicles have great advantages over internal combustion vehicles and one of the main advantages is the very high efficiency with which electric machines work, which can exceed 95%, whereas the two types of engines most used today, the Otto cycle engine and the diesel engine do not exceed 25-30% efficiency in the case of the Otto cycle engine, and 30-45% in the case of the diesel engine, taking into account that diesel engines are engines with high efficiencies among those of internal combustion in vehicle applications.

As mechanical elements are introduced in the drive system, such as differentials, constant-speed universal joints and reduction stages, the overall efficiency of the drive system decreases, and in turn the weight of the vehicle increases, which results in worse energy consumptions. Therefore, from among all the existing electric vehicle architectures, those which dispense with mechanical elements which introduce losses, such as elements modifying the torque, speed, angle of attack, etc. between the power output of the motor and the wheel are the most suitable in terms of energy efficiency, directly affecting the improvement of the overall efficiency of the drive system.

Currently, following this concept of maximally reducing the mechanical elements between the output of the electric motor and the wheel, there are basically two types of configurations which are used when designing a purely electric drive system; the direct drive configuration and the motor in wheel configuration, which can be considered as a particular type of the direct drive configuration.

The direct drive concept is based on the transmission of the torque of the electric motor to the drive wheel by means of a direct mechanical connection (flanging and axle shaft), without any other type of transformation of the movement. By means of direct drive, the reduction of the losses associated with differentials and reduction stages is achieved (therefore it is considered as a solution with high mechanical efficiency), simplifying the system at the same time. Another advantage is that direct drive motors are anchored to the chassis and therefore form part of the suspended mass of the vehicle (the one corresponding to the proportion of the total mass which is supported by the suspension), reducing the non-suspended mass (which includes all or a part of the mass of components such as the wheels, stub axles, bearings, suspension arms, etc.), and therefore improving the dynamic behavior of the suspension.

The motor in wheel drive system is a solution consisting of taking direct drive to its utmost expression, directly connecting the electric motor to the wheel without intermediate mechanical elements, the motor therefore being integrated inside the cavity existing in the rim. This arrangement obtains a slightly greater overall mechanical efficiency than direct drive (this increase is due to the elimination of the losses in the axle shaft and constant-speed universal joints), although at the dynamic behavior level, the motor in wheel system has several drawbacks which are detailed below:
- Increase of loss of the non-suspended mass, which can be very high in some cases if high powers are to be reached, compromising the good behavior of the suspension which is directly linked to the weight of the non-suspended mass, this behavior improving when the non-suspended mass is reduced.
- Motor in wheel systems are much more exposed to adverse conditions, such as dirt, oxidizing and/or corrosive agents, etc., as well as to much greater vibrations than a conventional direct drive arrangement.

Currently used electric traction systems based on both arrangements (direct drive and motor in wheel) have solutions in which the two drive wheels of the same axle do not have any type of mechanical attachment allowing the adjusted coupling of their movements. This causes that when one of the wheels loses grip, the power available in the electric motor driving that wheel can be used to move the vehicle, whereby the dynamic performance of the vehicle decreases since the total power of the two electric motors of the system cannot be used. This problem can be particularly important in vehicles with a reduced total power, and in which in certain situations of low or different grip between wheels of one and the same axle, it would be convenient to transmit all the power available in the system to the ground to maintain a minimum dynamic performance of the vehicle. It would also have an application to enable the maximum use of the regenerative braking which vehicles with electric drive systems have.

This problem currently has a relatively simple solution based on the features of electric motors, which allow operations above the rated speed for a relatively long period (depending on the type of motor), and offering in some cases of motors aimed at the automotive sectors powers greater by 45-50% than the rated power for periods which can range between 60-90 seconds. This feature allows solving the aforementioned problem of lack of final power in one of wheels by simply taking the motor corresponding to that wheel to an overexcited operating mode, achieving an extra power for short time periods. The drawback of this solution is that if the vehicle travels over very slippery terrain, it will be necessary to use motors in these overexcited modes for long time periods, whereby the motors will end up being damaged, since they are designed to work in these overexcited modes only for short time periods.

German patent application DE-A-4434237 describes an axle of a vehicle with respective electric motors individually connected to the drive wheels through their respective gears. By means of a sensor the movements of the steering and the loads of the individual motors are measured to assure an optimal distribution through coupling control means, which controls a clutch which allows interconnecting the motors. Nevertheless, this system is not based on the direct drive of the driving wheels and, therefore, has the drawbacks already mentioned above since it introduces mechanical elements in the drive system, such as differentials, constant-speed universal joints and reduction stages, the overall efficiency of the drive system decreases, and in turn the weight of the vehicle increases, which results in worse energy consumptions. Patent application PCT WO 2004/035342 describes a vehicle with individual transmissions to the drive wheels in which electric motors are arranged radially outside the drive wheels and connected thereto. The drive wheels can be connected or disconnected through a clutch. This patent does not present a direct drive arrangement of the driving wheels and, therefore, has the drawbacks already mentioned above since it introduces mechanical elements in the drive system, such as differentials, constant-speed universal joints and reduction stages, the overall efficiency of the drive system decreases, and in turn the weight of the vehicle increases, which results in worse energy consumptions. Patent US-3799284 relates to a drive system including two electric motors which can act independently or jointly, depending on the situation of a differential which attaches them. This patent does not present a direct drive arrangement of the driving wheels therefore it has the already mentioned problems. Furthermore, the mechanical attachment between the two motors by means of a differential is not very flexible in relation to degree of coupling.

Patent US-2005067199 describes a drive device comprising two electric motors and a clutch. The motors have an output shaft going directly to the clutch which allows it to alternately use one of the motors depending on the travel conditions. They are not motors with direct drive to the wheels.

German patent DE-102005026874 describes a drive system for off-road vehicles incorporating in a drive axle two electric motors and three clutches, which increases its complexity, increases the wear and makes the control logic also be complex.

German patent DE-102006028790 relates to a permanent use torque distribution mechanism, whereby the losses of the system due to coupling are continuous.

Patent ES-2027099 relates to an electronic differential for electric vehicles with a complete coupling in the event of an emergency, transforming it into a rigid axle with the subsequent risk and reduction in maneuverability.

United States patent US-5453930 describes a drive system for wheels of electric vehicles with at least two electric motors connected to the wheels independently of each other. Each of the motors inherently has different torque characteristics with respect to the rotational speed and to the maximum torque, and a control device responding to traveling conditions and to the torque characteristics of the motors of the vehicle in a lower consumption mode in which at least one of the motors is driven in a high efficiency range to assure the possibility of a long travel distance per one battery charge. The motor in wheel system described in this patent has the problem already mentioned above, i.e., when one of the wheels loses grip, the power available in the electric motor driving that wheel cannot be used to move the vehicle, whereby the dynamic performance of the vehicle since the total power of the two electric motors of the system cannot be used.

United States patent application US 2005/252701 describes a drive system for an electric vehicle which allows selecting the drive wheels in accordance with road circumstances. Each wheel has its own motor capable of working as a driver or regenerative brake, according to whether it is selected to drive or brake in accordance with the traveling circumstances of the vehicle. The motor in wheel system described in this patent also has the problem already mentioned above, i.e., when one of the wheels loses grip, the power available in the electric motor driving that wheel cannot be used to move the vehicle, whereby the dynamic performance of the vehicle decreases since the total power of the two electric motors of the system cannot be used.

Japanese patent application JP-A-2008207739 describes an electric vehicle with lightweight electric motors connected to respective hubs of the drive wheels, provided with, among other elements, respective internal power adjustment devices connected to the electric motors, as well as clutches of the devices which are driven to be able to connect the right drive wheel to the left motor in wheel. In the motor in wheel type drive system described in this document, two clutches per motor arranged inside the motor are used, which results in a complex system with regard to the system as such and in relation to its manufacture, with a high cost, while at the same time the use of the plurality of clutches involves many losses in the form of energy dissipation and, therefore, a reduction in the efficiency.

Patent ES-2289726T3 describes an all wheel-drive vehicle including at least two axles and an electric or hydraulic drive device having several electric or hydraulic motors, each associated with one of the driving wheels and which drive such wheel through a gear. The motors of an axle can be coupled to one another by means of shiftable transverse locking devices and at least one motor of a side of the vehicle can be coupled through a shiftable longitudinal locking device with a motor associated with one of the other axles. This system does not allow an optimal use of the system.

None of these documents describes a direct drive system (or motor in wheel system which would also be a similar arrangement since it does not have, in the same way as direct drive, reduction stages, differentials, constant-speed universal joints, etc.), in which the power of the electric motor connected to a wheel with traction loss can be used in a variable manner between 0 and 100% to drive the wheel which has not experienced or which has experiences less traction loss.

### Description of the Invention

The object of the present invention is to overcome the drawbacks of the state of the art detailed above by means of a traction system for a direct drive electric vehicle comprising a right electric motor with a first right power axle directly connected to a right drive wheel and a left electric motor with a first left power axle directly connected to a left drive wheel, a traction control circuit comprising sensor means and transmitting additional power to a drive wheel when the sensor means detect a traction loss of another drive wheel, overexcitation means for individually and incrementally overexciting each electric motor during an overexcitation time and with an overexcitation power, and at least one power source powering the electric motors, in which the traction control circuit comprises a coupling device connected to respective second power axles of the electric motors and which can perform a variable torque transmission from a nil degree of coupling to a complete degree of coupling between the electric motors, as well as a management logic activating and adjusting the degree of coupling of the coupling device between the electric motors according to the degree of traction loss of at least one drive wheel, detected by at least one of the sensor means and according to whether the overexcitation time of each of the electric motors exceeds a threshold value such that below this threshold value the activation of the coupling device will not occur if the traction loss can be solved by overexcitation of the motor.

It can be observed that the present invention allows having an electric drive system formed by two motors in a direct drive or motor in wheel arrangement, with a connectable mechanical coupling allowing the change of torque from one motor to another when low grip is detected, i.e., a traction loss in one of the wheels, which will vary its torque transmission from a nil coupling (torque transmitted 0% between the two motors) to a complete coupling (torque transmitted 100% between the two motors), with the infinite intermediate possibilities available. The management logic thus allows a variable degree of coupling between both electric motors, depending on the grip available in each wheel, and on the time the slipping situation lasts.

In a preferred embodiment of the invention, the traction control circuit further comprises comparing means for comparing the degree of traction loss of each wheel and continuously determining which of the electric motors is connected to a wheel with greater traction loss and which of the motors is connected to a wheel with lower traction loss; overexcitation means for individually and incrementally overexciting each electric motor during an overexcitation time and with a overexcitation power; power controlling means for deriving, through the overexcitation means, electric power from the power source, from the electric motor connected to the wheel with greater degree of traction loss towards the electric motor connected to the wheel with lower degree of traction loss when the traction loss exceeds a traction loss threshold; detecting means for individually detecting if the total overexcitation time at a real overexcitation power of each electric motor exceeds a maximum allowed continuous overexcitation time threshold of the electric motor; as well as activating means for stopping the overexcitation means and activating said management logic if the real overexcitation time of one of the electric motors exceeds a maximum allowed overexcited electric motor time threshold such that the activating means maintain the mechanical coupling device active until the traction loss is below the traction loss threshold again.

In this preferred embodiment, the management logic allows, in addition to a variable degree of coupling between both electric motors, depending on the grip available in each wheel, controlling the time the slipping situation lasts depending on the features of the motor (peak power and time that the electric motor can maintain that power without being damaged), to thus prevent damages in the electric motors. Thus, if the total continuous slipping time is less than the maximum time that the motor can be continuously overexcited, the motor will continue to be overexcited with traction incrementally, but when the total continuous slipping time is greater than the maximum continuous overexcitation time of the motor, the mechanical coupling device will start to be activated incrementally until the slipping disappears. Therefore, this preferred embodiment considers both the use of the overexcitation of the motor outside its nominal ranges and the use of the mechanical coupling system to be able to solve the problem of lack of traction by passing torque from one motor to another. Depending on the features of the application, and on the specific slipping situation, several scenarios can be considered in which this solution can achieve a good compromise (high efficiency, high reliability).

In a first application, such as for example the case of a farm vehicle or that of an off-road vehicle moving over slippery terrain, the electric drive system maintains slipping periods, i.e., periods of traction loss of one or both drive wheels, which are long and continuous. In this case, the system would be designed in its entirety or to comprise an operating mode which will enable as much as possible the use of the motors in an overexcited mode, in which the overall efficiency of the system will be maximum since coupling losses will be prevented. When the system surpasses the maximum continuous overexcitation time of the motors, the coupling would start operating, the stress of the motors decreasing, which motors would again enter an overexcited mode when the operating conditions allow it. In this application the efficiency would be optimized, using the overexcitation for the longest possible time, and using the coupling when necessary and the electric motors could be damaged.

A second application occurs in systems in which the motors do not allow a very high overexcitation (<20-25%), whereby the system can be designed taking into account this low overexcitation and with a more continuous use of the coupling. In these cases and depending on the application (applications with low probability of low grip for example), the overall efficiency could still be high, and the complete traction could be designed with highly optimized minimum total power requirements (and with motors with a low permissible overexcitation and a nominal operation basically), since this option of having the entire torque of the system in a single wheel, locking the coupling 100%, is available.

Suitably, the coupling device is designed such that it allows a variable degree of slipping (variable torque transmission between 0-100% between axles of electric motors), and with a nil or negligible wear, and a low energy dissipation, to obtain a high efficiency of the assembly. Thus, the coupling device must be a type of clutch designed by seeking these three requirements which will allow a continuous use without substantial wear, a range of variable torque transmission and a high efficiency since it does not offer significant energy losses which could reduce the good efficiency of the electric motors, and decrease the overall efficiency which is one of the strong points of the proposed solution.

There are currently coupling systems which meet these three indispensable requirements, variable torque transmission, negligible wear and high efficiency. A technical solution are Eddy current or hysteresis clutches (both of which are friction-free), which allow infinite degrees of slipping, with negligible wear but with energy dissipation (a good option when the use of the coupling is not going to be occasional in the specific application). Another type of coupling are magnetic particle clutches, offering quick responses, precise torque control, very good duration, but there is friction and therefore energy loss which could be reduced depending on the final application. An electric current for exciting them, is necessary, but the electric consumption is low in comparison with the power required in an electric vehicle, whereby the overall performance would not decrease substantially. It is also possible to use magnetorheological or magnetic fluid clutches which involve an energy use which is usually low and which, in the same way as magnetic particle clutches, would not significantly decrease the overall performance of the system depending on the application.

In an embodiment of the invention, the traction system according to the present invention is of direct drive type in which the electric motors are anchored in the chassis of the vehicle and each of the first power axles is connected to one of the drive wheels through respective coupling axle shafts, such that the coupling device is assembled between the two electric motors and connected to the respective second power axles. In another embodiment, the traction system according to the invention is of motor in wheel type in which each of the electric motors is anchored in a cavity of a rim of a drive wheel and each of the first power axles is directly connected to one of the drive wheels, such that the coupling device is assembled between the two electric motors in the chassis of the vehicle and connected to the respective second power axles through a coupling axle.

Likewise, the present invention relates to a vehicle driven with electric motors, comprising the traction system described above.

The present invention has different advantages compared to the traditional solution of overexciting the electric motors to take them to modes in which they offer a significant power increase (peak power) over the rated power, to solve the problem of lack of power in one of the wheels when the other is slipping. In view of the fact that electric motors cannot work in overexcited ranges for long time periods, and furthermore their sizing and their complexity increase if they are to be taken to these overexcited modes and a significant peak power is to be achieved, the present invention allows sizing the electric drive system in an optimal manner, such that without needing to design the driving assembly with electric motors having very high peak power values for long time periods, by means of using a mechanical connection of the two motors the vehicle can maintain its dynamic qualities, solving the problem of slipping of one of the drive wheels, passing the power not used at that time in the slipping wheel to the one having a good traction by means of the adjustable coupling system (clutch). Therefore, by means of using two elements of the system with specific features, a high efficiency of the assembly and improved dynamic possibilities, in addition to the possibility of sizing the system in an optimal manner to make maximum use of both the typical features of electric motors (high rated power and peak power) and of the total power of the assembly since the two motors can be mechanically coupled, are achieved.

According to what is inferred from the above, the present invention solves the drawbacks of the traction systems of the prior state of the art, allowing to not use or use this high-power overexcited mode for short time periods, mechanically connecting the two motors when the power requirements are for longer time periods, in which the electric motors could be damaged, in addition to allowing designing the electric drive assembly bearing in mind a much more conservative sizing (torque, power) of the electric motors, since the possibility of physically connecting the motors allows, as a whole, that it is not necessary to work with overexcitations or that very high peak powers for situations in which there is slipping are not necessary, directly affecting the sophistication of the motors and therefore the final price of the traction system, and therefore of the electric vehicle.

### Brief Description of the Drawings

Aspects and embodiment of the invention based on several drawings are described below, in which
Figure 1 is a schematic front view showing the mechanical and electromechanical elements of a basic embodiment of the traction system according to the invention;
Figure 2 is a block diagram of an embodiment of the control circuit according to the present invention;
Figure 3 is a diagram showing an embodiment of the basic operating mode of the management logic integrated in the control circuit shown in Figure 2;
Figure 4 is a partially sectioned schematic front view of the system shown in Figure 1 with its coupling device in a disconnected state;
Figure 5 is a partially sectioned schematic front view of the system shown in Figure 1 with its coupling device in a connected state;
Figure 6 is a schematic front section view of an embodiment of the system according to the invention applied to a direct drive system;
Figure 7 is a schematic front section view of an embodiment of the system according to the invention applied to a motor in wheel system.

In these figures, there are reference numbers identifying the following documents:
- 1a, 1b: drive wheel
- 2a, 2b: first power axle
- 3, 3a, 3b: electric motor
- 4a, 4b: second power axle
- 5: coupling device
- 6: management logic
- 7: traction control circuit
- 7a, 7b: sensor means
- 8: power source
- 9: comparing means
- 10, 10a, 10b: power controlling means
- 11, 11a, 11b: overexcitation means
- 12, 12a, 12b: detecting means
- 13: activating means
- 14a, 14b: coupling axle shaft
- 15a, 15b: cavity of the rim
- 16a, 16b: rim
- 17a, 17b: coupling axle
- 18: chassis of the vehicle
- 19: vehicle

### Embodiments of the Invention

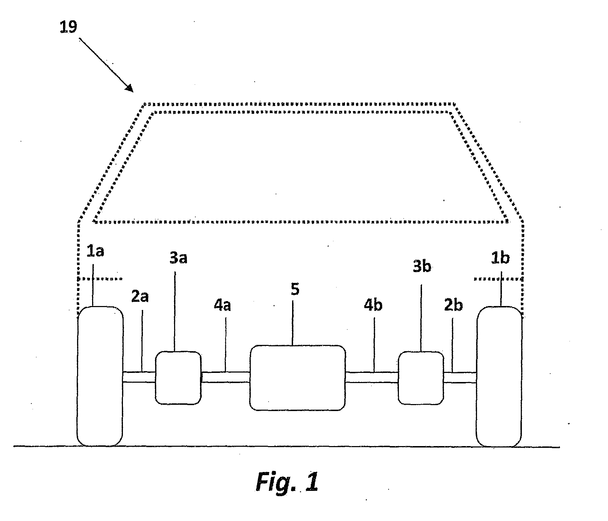

Figure 1 shows an embodiment of the invention for the front axle of a direct drive electric vehicle -19-, comprising a right electric motor -3a- with a first right power axle -2a- directly connected to a right drive wheel -1 a- and a left electric motor -3b- with a first left power axle -2b- directly connected to a left drive wheel -1b-. Between the electric motors -3a, 3b- there is arranged a friction-free coupling device -5-, such as for example an Eddy current clutch, connected to respective second power axles -4a, 4b- of the electric motors - 3a, 3b- and which can perform a variable torque transmission from a nil degree of coupling to a complete degree of coupling between the electric motors -3a, 3b-.

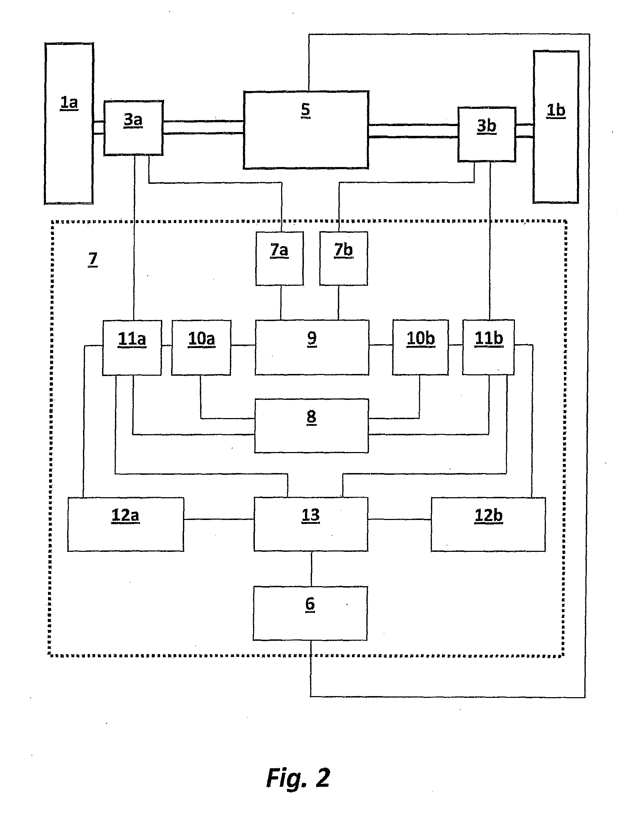

As can be seen in Figure 2, the motors -3a, 3b- and the coupling device -5- are connected to a traction control circuit -7- intended to transmit additional power to one of the drive wheels -1 a, 1 b- when, by - sensor means - 7a, 7b- it detects a traction loss of another drive wheel -1 a, 1 b-. To that end, traction control circuit -7- comprises comparing means -9- for comparing between one another the degree of traction loss of each drive wheel -1 a, 1 b-individually detected by each of the sensor means -7a, 7b- and continuously determining which of the electric motors -3a, 3b- is connected to a wheel with greater traction loss and which of the electric motors -3a, 3b- is connected to a drive wheel -3a, 3b- with lower traction loss. The comparing means -9- are connected to power controlling means -10a, 10b- which, through overexcitation means -11 a, 11 b-, derive electric power from the power source -8-, from the electric motor -3a, 3b- connected to the drive wheel -1a, 1 b- with greater degree of traction loss towards the electric motor -3a, 3b- connected to the drive wheel -1 a, 1 b- with lower degree of traction loss when the traction loss exceeds a traction loss threshold. The overexcitation means - 11 a, 11 b- thus individually and incrementally overexcite each electric motor 3a, 3b during an overexcitation time and with an overexcitation power and are connected to detecting means -12a, 12b- which individually detect if the total overexcitation time at a real overexcitation power of each electric motor -3a, 3b- exceeds a maximum allowed continuous overexcitation time threshold of the electric motor -3a, 3b-. When any of the detecting means - 12a, 12b- detects that the real overexcitation time of at least one of the electric motors -3a, 3b- exceeds a maximum allowed threshold time of the respective overexcited electric motor -3a, 3b-, it sends the corresponding signal to activating means -13- which them stop the overexcitation means - 11 a, 11 b- and activate a management logic -6- connected to the coupling device -5-, such that the activating means -12- maintain the coupling device - 5- active until the traction loss is below the traction loss threshold again.

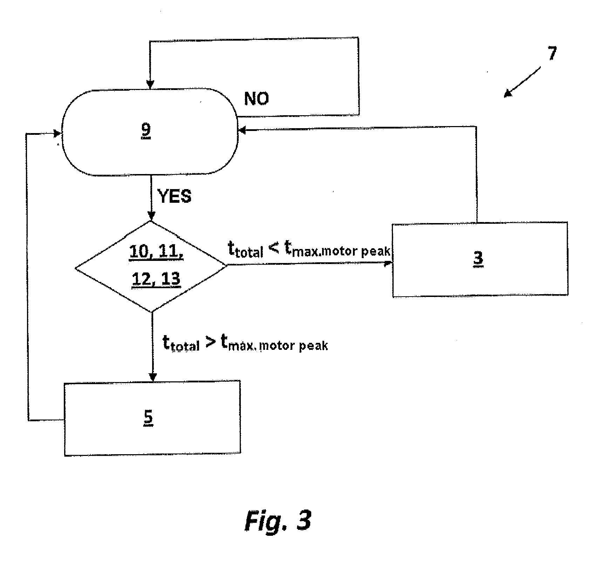

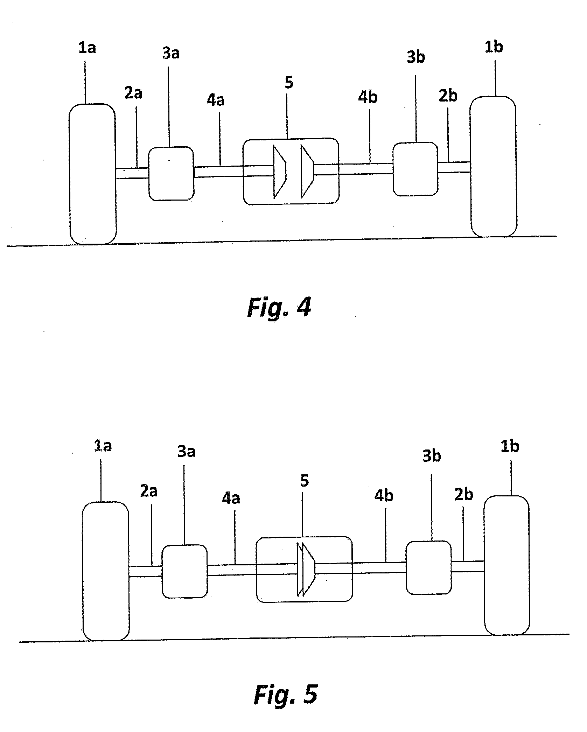

As can be seen in Figure 3, the management logic -6- activates and adjusts the degree of coupling of the coupling device -5- between the electric motors -3a, 3b- according to the degree of traction loss of at least one drive wheel -1 a, 1 b-, detected by the sensor means -7a, 7b-. Thus, when the total continuous slipping, i.e., the continuous traction loss, time is less than the maximum time that the motor -3- can be continuously overexcited, the motor will continue to be overexcited with traction incrementally, the coupling device -5- being in the position schematically depicted in Figure 4, whereas when the total continuous slipping time is greater than the maximum continuous overexcitation time of the motor, the coupling -5- is activated incrementally, which then adopts a coupling position such as that schematically depicted in Figure 5 until the slipping disappears.

The embodiment shown in Figures 2 and 3 therefore allows the use of both the overexcitation of the motor outside its nominal ranges and the use of the coupling system to be able to solve the problem of lack of traction by passing torque from one motor to another.

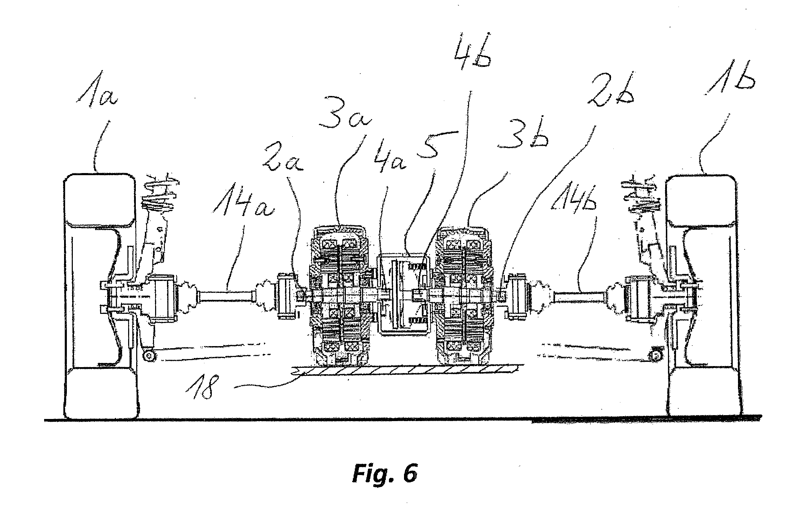

Figure 6 shows an embodiment of the present invention applied to the front axle of a direct drive traction system which is conventional in itself. It can be observed, in this embodiment, that the electric motors -3a, 3b- are anchored in the chassis -18- of the vehicle -19- and each of the first power axles -2a, 2b- is connected to one of the drive wheels -1 a, 1b- through respective coupling axle shafts -14a, 14b-, whereas the coupling device -5- is assembled between the two electric motors -3a, 3b- and connected to the respective second power axles -4a, 4b-.

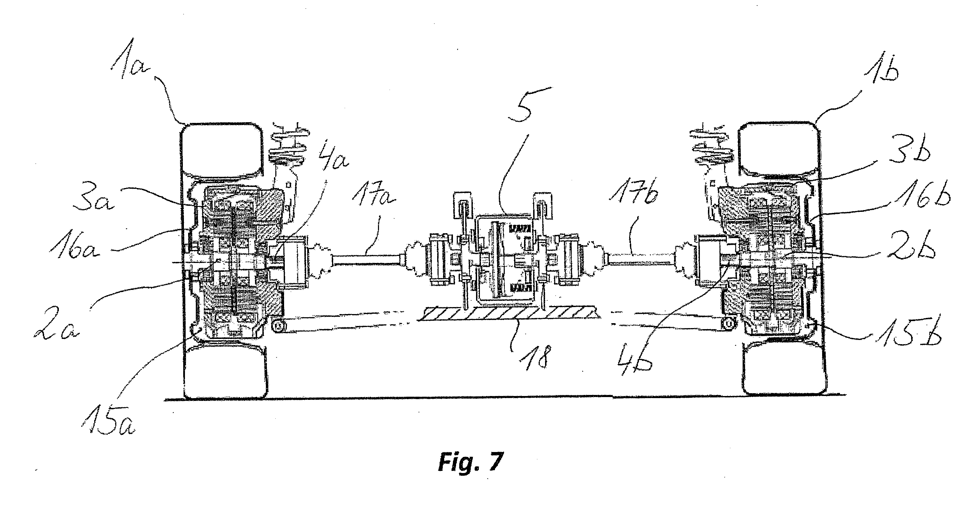

Figure 7 shows an embodiment of the present invention applied to the front axle of a motor in wheel traction system which is conventional in itself. In this embodiment, the electric motors -3a, 3b- are anchored in the respective cavities -15a, 15b- of respective rims -16a, 16b- of the drive wheels -1 a, 1 b-. Each of the first power axles-2a, 2b- is directly connected to one of the drive wheels -1 a, 1 b-, while at the same time the coupling device - 5- is assembled, between the two electric motors -3a, 3b-, in the chassis -18- of the vehicle -19- and connected to the respective second power axles -4a, 4b- through respective coupling axles -17a, 17b-.

## Claims

1. Traction system for a direct drive electric vehicle comprising a right electric motor (3a) with a first right power axle (2a) directly connected to a right drive wheel (1 a) and a left electric motor (3b) with a first left power axle (2b) directly connected to a left drive wheel (1b), a traction control circuit (7) comprising sensor means (7a, 7b) and transmitting additional power to a drive wheel (1 a, 1 b) when the sensor means (7a, 7b) detect a traction loss of another drive wheel (1 a, 1 b), overexcitation means (11 a, 11 b) for individually and incrementally overexciting each electric motor (3a, 3b) during an overexcitation time and with an overexcitation power and at least one power source (8) powering the electric motors (3a, 3b), **characterized in that** the traction control circuit comprises
a coupling device (5) connected to respective second power axles (4a, 4b) of the electric motors (3a, 3b) and which can perform a variable torque transmission from a nil degree of coupling to a complete degree of coupling between the electric motors (3a, 3b);
a management logic (6) activating and adjusting the degree of coupling of the coupling device (5) between the electric motors (3a, 3b) according to the degree of traction loss of at least one drive wheel (1a, 1b), detected by at least one of the sensor means (7a, 7b), and according to whether the overexcitation time of each of the electric motors (3a, 3b) exceeds a threshold value.

2. Traction system according to claim 1, **characterized in that** the traction control circuit (7) comprises
comparing means (9) for comparing the degree of traction loss of each drive wheel (1a, 1b) and continuously determining which of the electric motors (3a, 3b) is connected to a wheel with greater traction loss and which of the electric motors (3a, 3b) is connected to a drive wheel (3a, 3b) with lower traction loss;
power controlling means (10a, 10b) for deriving, through the overexcitation means (11a, 11b), electric power from the power source (8), from the electric motor (3a, 3b) connected to the drive wheel (1a, 1b) with greater degree of traction loss towards the electric motor (3a, 3b) connected to the drive wheel (1a, 1b) with lower degree of traction loss when the traction loss exceeds a traction loss threshold;
detecting means (12a, 12b) for individually detecting if the total overexcitation time at a real overexcitation power of each electric motor (3a, 3b) exceeds a maximum allowed continuous overexcitation time threshold of the electric motor (3a, 3b);
activating means (13) for stopping the overexcitation means (11 a, 11 b) and activating said management logic (6) if the real overexcitation time of one of the electric motors (3a, 3b) exceeds a maximum allowed time threshold of the overexcited electric motor (3a, 3b) such that the activating means (13) maintain the coupling device (5) active until the traction loss is below the traction loss threshold again.

3. Traction system according to claim 1 or 2, **characterized in that** the coupling device (5) comprises an Eddy current clutch.

4. Traction system according to claim 1 or 2, **characterized in that** the coupling device comprises a hysteresis clutch.

5. Traction system according to claim 1 or 2, **characterized in that** the coupling device (5) comprises a magnetic particle clutch.

6. Traction system, according to any one of the previous claims, **characterized in that**
the electric motors (3a, 3b) are anchored in the chassis (18) of the vehicle (19);
each of the first power axles (2a, 2b) is connected to one of the drive wheels (1a, 1b) through respective coupling axle shafts (14a, 14b);
the coupling device (5) is assembled between the two electric motors (3a, 3b) and connected to the respective second power axles (4a, 4b).

7. Traction system, according to any one of the previous claims, **characterized in that**
each of the electric motors (3a, 3b) is anchored in a cavity (15a, 15b) of a rim (16a, 16b) of a drive wheel (1 a, 1 b);
each of the first power axles (2a, 2b) is directly connected to one of the drive wheels (1a, 1b);
the coupling device (5) is assembled between the two electric motors (3a, 3b) in the chassis (18) of the vehicle (19) and connected to the respective second power axles (4a, 4b) through respective coupling axles (17a, 17b).

8. Vehicle driven with electric motors, **characterized in that** it comprises a traction system according to one of claims 1 to 7.
